# EUROPÄISCHE PATENTSCHRIFT

(11) **EP 1 337 481 B1**
(45) Veröffentlichungstag und Bekanntmachung des Hinweises auf die Patenterteilung: **28.12.2005**
(21) Anmeldenummer: 01992690.6
(22) Anmeldetag: 23.10.2001
(51) Int. Cl.: C03B 5/225, C03B 5/167

(54) **VERFAHREN UND VORRICHTUNG ZUR UNTERDRUCK-LÄUTERUNG EINER GLASSCHMELZE**
METHOD AND DEVICE FOR REFINING A GLASS MELT USING NEGATIVE PRESSURE
PROCEDE ET DISPOSITIF D'AFFINAGE SOUS VIDE DE VERRE EN FUSION

(30) Priorität: 06.11.2000 DE 10054881; 13.06.2001 DE 10128674
(43) Veröffentlichungstag der Anmeldung: 27.08.2003
(73) Patentinhaber: Schott AG, 55122 Mainz (DE)
(72) Erfinder: KARETTA, Frank, 67596 Dittelsheim-Hessloch (DE); WITTE, Jörg, 64295 Darmstadt (DE); DUCH, Klaus-Dieter, 65232 Taunusstein (DE); GOHLKE, Dirk, 40670 Meerbusch (DE); MÜNCH, Wolfgang, 55270 Bubenheim (DE); JAKWAY, Allen, 55118 Mainz (DE); EICHHOLZ, Rainer, 55126 Mainz (DE); LENTES, Frank-Thomas, 55411 Bingen (DE)
(86) Internationale Anmeldenummer: PCT/EP2001/012197
(87) Internationale Veröffentlichungsnummer: WO 2002/036509

(56) Entgegenhaltungen:
- DE-A- 3 320 980
- GB-A- 172 610
- US-A- 3 519 412
- PATENT ABSTRACTS OF JAPAN vol. 14, no. 531, 21. November 1990 (1990-11-21) & JP 02 221129 A (ASAHI GLASS CO LTD), 4. September 1990 (1990-09-04) in der Anmeldung erwähnt
- PATENT ABSTRACTS OF JAPAN vol. 2000, no. 06, 22. September 2000 (2000-09-22) & JP 2000 086249 A (ASAHI GLASS CO LTD), 28. März 2000 (2000-03-28)
- PATENT ABSTRACTS OF JAPAN vol. 2000, no. 12, 3. Januar 2001 (2001-01-03) & JP 2000 247647 A (ASAHI GLASS CO LTD), 12. September 2000 (2000-09-12)
- DATABASE WPI Section Ch, Week 16, Derwent Publications Ltd., London, GB; Class L01, AN 1998-177524, XP002188856 & RU 2 087 428 C (STEKLOPLASTIK RES PRODN ASSOC STOCK CO) 20 August 1997

## Beschreibung

Die Erfindung betrifft ein Verfahren und eine Vorrichtung zur Unterdruck-Läuterung einer Glasschmelze mit einem Unterdruck-Apparat, in dem die Glasschmelze über ein Steigrohr einer Läuterbank zugeführt und über ein Fallrohr aus der Läuterbank wieder abgeführt wird, wobei über dem Glasfluß in der Läuterbank ein Unterdruck erzeugt wird.

Die Läuterung der Glasschmelze, d. h. die Entfernung von Gasblasen aus der Glasschmelze, dient dazu, Blasenfreiheit zu erzielen. Das Aufsteigen der Gasblasen aus der Glasschmelze ist bei kleinen Tiegelschmetzen schon durch Anlegen eines Unterdruckes über der Glasschmelze beschleunigt worden.

Aus der Schrift DE 33 20 980 A1 ist ein Glasschmelzaggregat bekannt, das zumindest teilweise aus metallischem Zirkon besteht. So wird ein induktiv beheizter Zirkontiegel beschrieben, der, in einem vakuumdichten Stahlkessel angeordnet, zum Einschmelzen des Glasgemenges und Läutern der Glasschmelze unter Vakuum Verwendung findet.

Vorrichtungen zu Unterdruck-Läuterung einer Glasschmelze mit einem Unterdruck-Apparat der eingangs erwähnten Art sind beispielsweise aus den Schriften US 1,598,308, EP 0 908 417 A2 und JP 2-2211229 A bekannt. Aus den ersten beiden Schriften geht die Verwendung von keramischen Feuerfestmaterialien als Glaskontaktmaterial hervor, aus der letztgenannten Schrift geht die Verwendung von Platin bzw. Platinlegierungen als Glaskontaktmaterial hervor.

Sowohl die Verwendung von keramischen Feuerfestmaterialen als auch die Verwendung von Platin und dessen Legierungen ist dabei mit einer Reihe von Nachteilen verbunden.

So sind keramische Feuerfestmaterialien im Vergleich zu Platin und dessen Legierungen im Kontakt mit einer Glasschmelze einem starken Verschleiß sowie einer erhöhten Korrosion ausgesetzt. Dies ist zum einen mit geringen Betriebszeiten der Anlagen und hohem Wartungs- und Reparaturaufwand verbunden und geht zum anderen mit einem hohen Glasfehlerbildungspotential (Schlierenbildung, Einschlüsse, Blasen insbesondere im Fallrohr) einher. Weiterhin stellt die Beheizung bei Glasschmelzen, die nicht oder nur schlecht direkt elektrisch beheizt werden können, ein Problem dar.

Im Hinblick auf die Bildung von Glasfehlern ist der Einsatz von Platin bzw. Platinlegierungen zu bevorzugen, aber die damit verbundene Kapitalbindung ist sehr hoch.

Es ist daher Aufgabe der Erfindung, einer Vorrichtung und ein Verfahren zur Unterdruck-Läuterung einer Glasschmelze bereit zu stellen, bei der die eingangs erwähnten Nachteile überwunden werden. Im Hinblick auf den Kontakt mit der zu läuternden Glasschmelze soll die Vorrichtung oder zumindest ein Teil der Vorrichtung korrosions- und verschleißbeständig, wartungsarm und möglichst kostengünstig in der Anschaffung und im Betrieb sein. Bei Druckanstieg bzw. abfallender Glasschmelzsäule soll die Innenseite der Vorrichtung, insbesondere die Innenseite des Steig- und Fallrohrs sowie die Innenseite der Läuterkammer, vor Oxidation geschützt werden.

Die Aufgabe wird gemäß Anspruch 1 dadurch gelöst, daß eine Vorrichtung zur Unterdruck-Läuterung einer Glasschmelze mit einem Unterdruck-Apparat, in dem die Glasschmelze über ein Steigrohr einer Läuterbank zugeführt und über ein Fallrohr aus der Läuterbank wieder abgeführt wird, wobei über dem Glasfluß in der Läuterbank ein Unterdruck erzeugt wird, derart konstruiert ist, daß das Steigrohr und/oder das Fallrohr und/oder die Läuterbank wenigstens ein Bauteil aus wenigstens einem Refraktärmetall und/oder aus einer Refraktärmetall-Legierung als Glaskontaktmaterial aufweist. Weiterhin ist eine Verbindung mit einem Schutzgasreservoir zur Flutung der Vorrichtung mit einem Schutzgas vorgesehen, so dass die Innenseite des Bauteils insbesondere bei Druckanstieg bzw. abfallender Glasschmelzsäule mit einem Schutzgas vor Oxidation schützbar ist

Das Verfahren wird bevorzugt in eine Vorrichtung gemäß wenigstens einem der Ansprüche 1 bis 19 durchgeführt.

Bei dem erfindungsgemäßen Verfahren wird zur Unterdruck-Läuterung einer Glasschmelze in einem Unterdruck-Apparat die Glasschmelze über ein Steigrohr einer Läuterbank zugeführt und über ein Fallrohr aus der Läuterbank wieder abgeführt, wobei über dem Glasfluß in der Läuterbank ein Unterdruck erzeugt wird, und wobei das Steigrohr und/oder das Fallrohr und/oder die Läuterbank wenigstens ein Bauteil aus wenigstens einem Refraktärmetall und/oder aus einer Refraktärmetall-Legierung als Glaskontaktmaterial aufweist.
Weiterhin wird die Innenseite des Bauteils insbesondere bei Druckanstieg bzw. abfallender Glasschmelzsäule durch Flutung mit einem Schutzgas vor Oxidation geschützt. Dadurch, daß das Steigrohr und/oder das Fallrohr und/oder die Läuterbank wenigstens ein Bauteil aus wenigstens einem Refraktärmetall und/oder aus einer Refraktärmetall-Legierung als Glaskontaktmaterial aufweist, können die in der Aufgabenstellung genannten Anforderungen erfüllt werden.

Dabei konnte festgestellt werden, daß Bauteile aus Molybdän, Wolfram, Tantal oder Hafnium oder aus einer Legierung, die wenigstens eines dieser Refraktärmetalle enthält, die genannten Anforderungen an die Vorrichtung zur Unterdruck-Läuterung besonders gut erfüllen. Insbesondere Tantal und Hafnium bzw. deren Legierungen bilden oxidische Schutzschichten mit einem geringem Dampfdruck aus.

Zum Schutz der Bauteile - Refraktärmetalle und deren Legierungen oxidieren in der Regel bei Temperaturen oberhalb 500 °C bei Anwesenheit von Sauerstoff stark - wird die der Glasschmelze abgewandte Seite der Bauteile vorzugsweise mit einem Schutz- (z.B. Stickstoff, Edelgas) oder Formiergas (Wasserstoff/Stickstoff, Edelgas) gespült oder aber die der Glasschmelze abgewandte Seite wird durch Verglasung, beispielsweise durch gezieltes Hinterfließen der Bauteile durch die Glasschmelze, vor Oxidation geschützt. Die in Kontakt mit der Glasschmelze stehende Seite der Bauteile ist hingegen während des Betriebs der Vorrichtung ausreichend durch die Schmelze geschützt. Zur Spülung befindet sich wenigstens das Bauteil in einem Gehäuse, das über eine Zuführung für das Schutz- bzw. Formiergas und eine entsprechende Abführung verfügt. Der Wasserstoffgehalt des Formiergases kann dabei bis 100 % betragen.

Um ein optimales Betreiben der Vorrichtung zu gewährleisten, sind die Bauteile vakuumdicht ausgeführt und vorzugsweise auch mechanisch stabil gegen Druckdifferenzen ausgelegt.

In einer besonders bevorzugten Ausführungsform der Vorrichtung bestehen die Bauteile aus einzelnen Abschnitten, insbesondere aus Rohrabschnitten, die mittels einer Flanschverbindung oder einer Verschraubung miteinander verbunden sind. Rohrabschnitte lassen sich einfach und kostengünstig aus Refraktärmetallen oder deren Legierungen herstellen und weiterverarbeiten. Die Verbindungen der Rohrabschnitte lassen sich dabei mittels Schneidkanten besonders einfach gasdicht verbinden. Eine zusätzliche Dichtwirkung wird erreicht, wenn die miteinander verbundenen Rohrabschnitte vorzugsweise bei Temperaturen oberhalb 1000 °C geglüht werden, dabei verschweißen bzw. versintern die Kontaktstellen miteinander.

Die Schneidkantendichtung ist eine statische, dichtstofflose Verbindung. Sie dient hier zum Verbinden rotationssymmetrischer Rohrabschnitte. Zur Erhöhung des Anpressdruckes wird bei jeweils einem der zu verbindenden Rohrpaare die Dichtfläche (planseltige Anlagefläche) derart verkleinert, daß konzentrisch umlaufende, im Querschnitt v-förmige Schneidkanten entstehen. Beim Verspannen der Verbindungsstellen wird der Anpressdruck an den Schneidkanten soweit erhöht, daß es, wenn erforderlich, zum fließen des Werkstoffes kommen kann.

Das Bauteil befindet sich wie bereits erwähnt bevorzugt in einem Gehäuse, insbesondere in einem gasdichten Gehäuse, wobei die thermische Dehnung des Bauteils gegenüber dem Gehäuse ausgeglichen wird, beispielsweise durch einen federgestützten Faltenbalg, der vorzugsweise Teil des Gehäuses ist. Die glasschmelzeführenden, innenliegenden Bauteile unterliegen höheren Temperaturen als die umgebenden Teile und dehnen sich demzufolge stärker aus.

Der Gasdruck im Gehäuse sollte gegenüber dem Atmosphärendruck leicht erhöht sein. Wenn im Gehäuse ein Unterdruck herrscht, besteht die Gefahr, das durch Einsaugen von Luft durch Lecks die Bildung einer explosionsfähigen Mischung mit dem Formiergas möglich ist. Ebenfalls würde das Einsaugen von Luft dazu führen, daß das Bauteil rückseitig stark oxidiert. Das bedeutet aber, daß das Bauteil zusätzlich über eine hohe mechanische Stabilität verfügen muß, um der Druckdifferenz (leichter Überdruck außen, Unterdruck innen) standhalten (tragen) zu können. Ebenfalls müssen alle Verbindungen gasdicht ausgeführt werden. Da im Gasraum mit einem leichten Überdruck gearbeitet wird, dürfen keine Schutzgase in die Glasschmelze gelangen. Dies würde zur Bildung von Glasfehlern führen (Bildung von Gasblasen im Glas, Reduktion von Glasbestandteilen bei wasserstoffhaltigem Schutzgas).

Weiterhin ist es von Vorteil, wenn das Bauteil beheizbar ist. Insbesondere bei Vorrichtungen zur Unterdruck-Läuterung von Glasschmelzen, die ein hohes Oberflächen zu Volumen-Verhältnis der Glassschmelze bzw. einen geringen Durchfluß und somit eine hohe Wärmeabgabe an die Umgebung aufweisen, ist es notwendig, die Glassschmelze zusätzlich zu beheizen. Eine Möglichkeit ist dabei die Beheizung mittels Strahlungsheizkörpern (z.B. Netze aus Refraktärmetallen oder deren Legierungen, z. B. aus Molybdän, Wolfram, Tantal oder Hafnium), wobei die Strahlungsheizkörper bei Bedarf - da sie beim Betrieb Oberflächentemperaturen bis zu 2200 °C erreichen - ähnlich wie die Bauteile durch Spülung mit einem Schutz- bzw. Formiergas oder durch Verglasung vor Oxidation geschützt werden.

Weiterhin kann die Beheizung der Bauteile auch induktiv oder über direkten Stromfluß im Bauteil mit einem Wechselstrom hoher Frequenz erfolgen. Auch eine Beheizung über direkten Stromfluß in der Glasschmelze unter Verwendung einer zentralen Stabelektrode und dem Bauteil als Gegenelektrode ist besonders dann vorteilhaft, wenn die Glassschmelze eine ausreichende elektrische Leitfähigkeit aufweist.

Um insbesondere bei Druckanstieg bzw. abfallender Glasschmelzsäule auch die Innenseite des Bauteils - das dann nicht mehr von der Glassschmelze bedeckt ist - vor Oxidation zu schützen ist die Vorrichtung mit einem Schutzgas wenigstens teilweise flutbar. Dabei ist insbesondere eine Verbindung mit einem Schutzgasreservoir zur Flutung der Vorrichtung mit einem Schutzgas vorgesehen, insbesondere eine automatische Verbindung, beispielsweise ein im Bedarfsfall automatisch öffnendes Ventil.

Anhand der folgenden Ausführungsbeispiele und Zeichnungen soll die Erfindung näher erläutert werden.

Es zeigen:
- Fig. 1: Detailansicht einer erfindungsgemäßen Vorrichtung zur Unterdruckläuterung mit Strahlungsheizkörpern,
- Fig. 2: Detailansicht einer erfindungsgemäßen Vorrichtung zur Unterdruckläuterung mit induktiver Beheizung,
- Fig. 3: Detailansicht einer erfindungsgemäßen Vorrichtung zur Unterdruckläuterung mit direkter elektrischer Beheizung der Glasschmelze, und
- Fig. 4: Detailansicht einer erfindungsgemäßen Vorrichtung zur Unterdruckläuterung mit federgestütztem Faltenbalg zum Ausgleich dem thermischen Dehnungen.

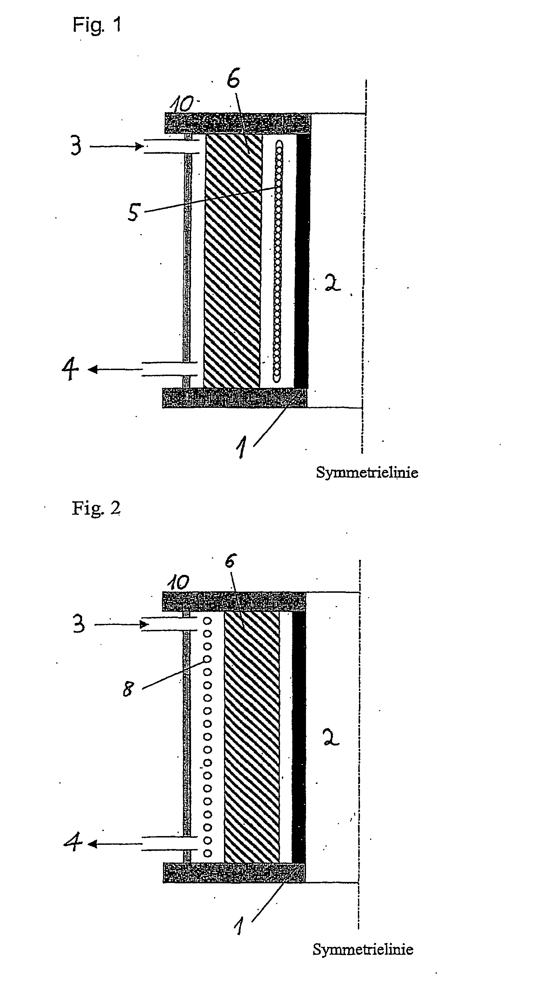

Figur 1 zeigt einen Teil einer erfindungsgemäßen Vorrichtung zur Unterdruck-Läuterung einer Glasschmelze mit einem Unterdruck-Apparat, in dem die Glasschmelze (2) über ein Steigrohr einer Läuterbank zugeführt und über ein Fallrohr aus der Läuterbank wieder abgeführt wird, wobei über dem Glasfluß in der Läuterbank ein Unterdruck erzeugt wird und wobei das Steigrohr und/oder das Fallrohr und/oder die Läuterbank wenigstens ein Bauteil (1) aus wenigstens einem Refraktärmetall und/oder aus einer Refraktärmetall-Legierung als Glaskontaktmaterial aufweist.
Das rohrförmig ausgeführte Bauteil (1), vorzugsweise aus Molybdän oder Wolfram oder aus einer entsprechenden Legierung, wird von einem Gehäuse (10) (z. B. aus Stahl, Aluminium oder Kunststoff) umschlossen. Im Gehäuse befinden sich auch die Zu- (3) und Abführung (4) für das Schutz- bzw. Formiergas.
Das Bauteil (1) wird auf der der Glasschmelze abgewandten Seite durch Spülung mit einem Schutz- bzw. Formiergas vor Oxidation geschützt ist, ebenso ist der Strahlungsheizkörper (5) geschützt.
Zwischen den Strahlungsheizkörpern (5) und dem Gehäuse befindet sich Feuerfestmaterial (6). Die Aufgabe des Feuerfestmaterials ist es, einerseits die Wärmeverluste zu minimieren und andererseits die Temperatur soweit abzusenken, daß das Gehäusematerial keinen Schaden nimmt. Unter Umständen sind zu diesem Zweck einzelne Bereiche mit einer Kühlung, beispielsweise einer Wasserkühlung, zu versehen. Im Feuerfestmaterial sind Durchführungen (nicht dargestellt) vorgesehen, die den Zu- bzw. Abfluß des Schutzgases zum Bauteil und zu den Strahlungsheizkörpern ermöglichen.
Die Strahlungsheizkörper sind so um das Bauteil angeordnet, daß sie das Bauteil direkt anstrahlen bzw. beheizen können. Die elektrischen Zuführungen zu den Heizkörpern sind gegen die hohen Temperaturen geschützt (z. B. durch Wasserkühlung und durch Abschirmung der Strahlung).

Figur 2 zeigt ebenfalls eine Detailansicht einer weiteren erfindungsgemäßen Vorrichtung. Auch hier ist ein Feuerfestmaterial (6) um ein rohrförmiges Bauteil (1) herum angebracht, wobei zwischen dem Bauteil und Isolation ein Spalt verbleibt, durch den das Schutz- bzw. Formiergas strömen kann. Die (evtl. wassergekühlte und/oder zusätzlich wärmeisolierte) Induktionsspule (8) zur induktiven Beheizung des Bauteils ist im kälteren Bereich zwischen dem Gehäuse und der Isolation angebracht.

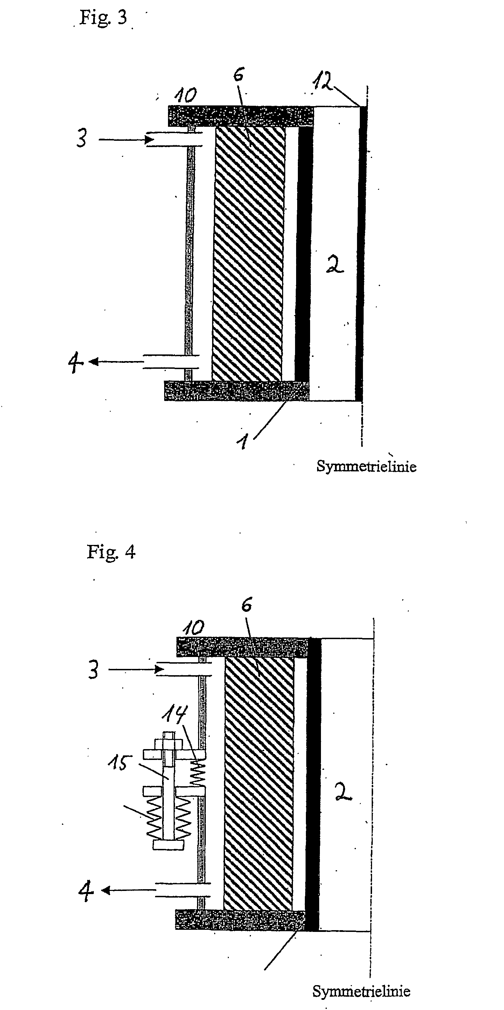

In Figur 3 ist ebenfalls in Detailansicht ein Teil einer erfindungsgemäßen Vorrichtung gezeigt, wobei die Beheizung der Glasschmelze (2) mittels direkter elektrischer Beheizung mit einer zentralen Stabelektrode (12) und dem Bauteil (1) als Gegenelektrode erfolgt. Bei dieser Ausführung geschieht die Beheizung über den Stromfluß in der Glasschmelze. Im Gegensatz zum standardmäßigen Aufbau von Elektrodenheizkreisen ist hier aber aufgrund der Anordnung mit der zentralen Stabelektrode und dem Bauteil als Gegenelektrode die Heizkreislänge sehr kurz, so daß auch elektrisch schlecht leitende Glasschmelzen mit noch akzeptablen elektrischen Spannungen beheizt werden können.

Die thermische Dehnung des Bauteils gegenüber dem Gehäuse wird gemäß Figur 4 mittels eines federgestützten (15) Faltenbalgs (14), der Teil des Gehäuses ist, ausgeglichen.

Aufgrund des geringen elektrischen Widerstands von Metallen ist eine direkte elektrische Beheizung eines erfindungsgemäß vorgesehenen Bauteils mit Wechselstrom bei normaler Netzfrequenz (50 bzw. 60 Hz) aufgrund der hohen notwendigen Ströme in der Regel nicht praktikabel. Bei hohen Wechselstromfrequenzen tritt aber der sogenannte Skin- oder Haut-Effekt auf, der bewirkt, daß der Strom nur in einer dünnen Schicht (Haut) am Außenrand des Rohres fließt. Damit verbunden ist eine Erhöhung des elektrischen Widerstandes, so daß der benötigte Strom entsprechend kleiner ausfällt. Somit wird eine direkte elektrische Beheizung des Rohres wieder praktikabel.
Der Aufbau einer solchen direkten elektrischen Beheizung entspricht dem in Figur 2 dargestellten, jedoch ohne Induktionsspule bzw. dem in Figur 3 dargestellten Aufbau, jedoch ohne Stabelektrode. Der elektrische Widerstand gegenüber Gleichstrom für ein rohrförmiges Bauteil mit einem Außendurchmesser von 300 mm erhöht sich bei einer Wechselstromfrequenz von 10 kHz etwa um den Faktor 21 und bei einer Wechselstromfrequenz von 100 kHz etwa um den Faktor 67.

Der Oxidationsschutz der Bauteile muss sowohl beim Anfahren der Anlage als auch in Notfallsituationen sicher beherrscht werden. Beim erstmaligen Anfahren können die Bauteile innen mit einer kommerziell erhältlichen Oxidationsschutzschicht beschichtet eingebaut werden (z.B. SIBOR der Fa. PLANSEE). Diese Schicht löst sich beim Betrieb in der Glasschmelze auf. Eine andere Möglichkeit besteht darin das Leervolumen der Anlage mit einem Inertgas (Edelgase, Stickstoff) oder einer reduzierenden Atmosphäre (z. B. durch Beimengung von Wasserstoff) zu füllen. '

Für den Fall, daß es in der Läuterbank zu einem Druckanstieg kommt (unvorhergesehen oder bewußt herbeigeführt), der die Glassäule soweit absinken läßt, daß die Bauteile nicht mehr durch die Glasschmelze vor Oxidation geschützt werden, müssen andere Maßnahmen zum Schutz des Bauteile greifen. Dies kann durch eine Flutung der Anlage mit Inertgas oder einer reduzierenden Atmosphäre geschehen. Im Fall des bewußt herbeigeführten Druckanstiegs, kann dieser direkt über den Einlaß des Schutzgases gesteuert werden.
Im Fall des unvorhergesehenen Druckanstiegs (z. B. durch Ausfall der Pumpe) muß die Anlage automatisch geflutet werden, z. B. durch ein Magnetventil, das sich automatisch öffnet und die Läuterbank mit einem Schutzgasreservoir verbindet.

## Patentansprüche

1. Vorrichtung zur Unterdruck-Läuterung einer Glasschmelze mit einem Unterdruck-Apparat, in dem die Glasschmelze über ein Steigrohr einer Läuterbank zugeführt und über ein Fallrohr aus der Läuterbank wieder abgeführt wird, wobei über dem Glasfluß in der Läuterbank ein Unterdruck erzeugt wird,
**dadurch gekennzeichnet,**
**daß** das Steigrohr und/oder das Fallrohr und/oder die Läuterbank wenigstens ein Bauteil aus wenigstens einem Refraktärmetall und/oder aus einer Refraktärmetall-Legierung als Glaskontaktmaterial aufweist und dass eine Verbindung mit einem Schutzgasreservoir zur Flutung der Vorrichtung mit einem Schutzgas vorgesehen ist, so dass die Innenseite des Bauteils insbesondere bei Druckanstieg bzw. abfallender Glasschmelzsäule mit einem Schutzgas vor Oxidation schützbar ist

2. Vorrichtung nach Anspruch 1,
**dadurch gekennzeichnet,**
**daß** das Bauteil aus Molybdän, Wolfram, Tantal oder Hafnium oder aus einer Legierung, die wenigstens eines dieser Refraktärmetalle enthält, besteht.

3. Vorrichtung nach Anspruch 1 oder 2,
**dadurch gekennzeichnet,**
**daß** das Bauteil auf der der Glasschmelze abgewandten Seite durch Spülung mit einem Schutz- bzw. Formiergas vor Oxidation geschützt ist.

4. Vorrichtung nach wenigstens einem der Ansprüche 1 bis 3,
**dadurch gekennzeichnet,**
**daß** das Bauteil auf der der Glasschmelze abgewandten Seite durch Verglasung vor Oxidation geschützt ist.

5. Vorrichtung nach wenigstens einem der Ansprüche 1 bis 4,
**dadurch gekennzeichnet,**
**daß** das Bauteil vakuumdicht ausgeführt ist.

6. Vorrichtung nach wenigstens einem der Ansprüche 1 bis 5,
**dadurch gekennzeichnet,**
**daß** das Bauteil mechanisch stabil gegen Druckdifferenzen ist.

7. Vorrichtung nach wenigstens einem der Ansprüche 1 bis 6,
**dadurch gekennzeichnet,**
**daß** das Bauteil aus einzelnen Rohrabschnitten besteht, die mittels einer Flanschverbindung oder einer Verschraubung miteinander verbunden sind.

8. Vorrichtung nach Anspruch 7,
**dadurch gekennzeichnet,**
**daß** die Verbindung mittels Schneidkanten gasdicht ausgeführt ist.

9. Vorrichtung nach Anspruch 7 oder 8,
**dadurch gekennzeichnet,**
**daß** die miteinander verbundenen Rohrabschnitte bei hohen Temperaturen geglüht sind, wobei eine Verschweißung bzw. Versinterung der Kontaktstellen entsteht.

10. Vorrichtung nach wenigstens einem der Ansprüche 1 bis 9,
**dadurch gekennzeichnet,**
**daß** sich das Bauteil in einem Gehäuse, insbesondere in einem gasdichten Gehäuse, befindet.

11. Vorrichtung nach Anspruch 10,
**dadurch gekennzeichnet**
**daß** die thermische Dehnung des Bauteils gegenüber dem Gehäuse ausgeglichen ist, insbesondere durch einen federgestützten Faltenbalg, der Teil des Gehäuses ist.

12. Vorrichtung nach wenigstens einem der Ansprüche 1 bis 11,
**dadurch gekennzeichnet,**
**daß** eine Beheizung des Bauteils vorgesehen ist.

13. Vorrichtung nach Anspruch 12,
**dadurch gekennzeichnet,**
**daß** die Beheizung mittels Strahlungsheizkörpern vorgesehen ist.

14. Vorrichtung nach Anspruch 13,
**dadurch gekennzeichnet,**
**daß** die Strahlungsheizkörper durch Spülung mit einem Schutz- bzw. Formiergas vor Oxidation geschützt sind.

15. Vorrichtung nach Anspruch 13,
**dadurch gekennzeichnet,**
**daß** die Strahlungsheizkörper durch Verglasung vor Oxidation geschützt sind.

16. Vorrichtung nach Anspruch 12,
**dadurch gekennzeichnet,**
**daß** eine induktive Beheizung vorgesehen ist.

17. Vorrichtung nach Anspruch 12,
**dadurch gekennzeichnet,**
**daß** eine Beheizung über direkten Stromfluß im Bauteil mit einem Wechselstrom hoher Frequenz vorgesehen ist.

18. Vorrichtung nach Anspruch 12,
**dadurch gekennzeichnet,**
**daß** eine Beheizung über direkten Stromfluß in der Glasschmelze unter Verwendung einer zentralen Stabelektrode und dem Bauteil als Gegenelektrode vorgesehen ist.

19. Vorrichtung nach Anspruch 1 bis 18,
**dadurch gekennzeichnet,**
**daß** die Verbindung mit dem Schutzgasreservoir zur Flutung eine automatische Verbindung, beispielsweise ein automatisch öffnendes Ventil ist.

20. Verfahren zur Unterdruck-Läuterung einer Glasschmelze in einem Unterdruck-Apparat, in dem die Glasschmelze über ein Steigrohr einer Läuterbank zugeführt und über ein Fallrohr aus der Läuterbank wieder abgeführt wird, wobei über dem Glasfluß in der Läuterbank ein Unterdruck erzeugt wird, und wobei das Steigrohr und/oder das Fallrohr und/oder die Läuterbank wenigstens ein Bauteil aus wenigstens einem Refraktärmetall und/oder aus einer Refraktärmetall-Legierung als Glaskontaktmaterial aufweist und wobei die Innenseite des Bauteils insbesondere bei Druckanstieg bzw. abfallender Glasschmelzsäule durch Flutung mit einem Schutzgas vor Oxidation geschützt wird.

## Claims

1. Device for the reduced-pressure refining of a glass melt using a reduced-pressure apparatus in which the glass melt is fed to a refining bank via a riser and is discharged again from the refining bank via a downpipe, a reduced pressure being generated by means of the glass flow in the refining bank, **characterized in that** the riser and/or the downpipe and/or the refining bank has at least one component made from at least one refractory metal and/or from a refractory metal alloy as glass-contact material, and **in that** there is a connection to a protective-gas reservoir for flooding the device with a protective gas, so that the inner side of the component can be protected from oxidation in particular in the event of a pressure rise or a drop in the glass melt column.

2. Device according to Claim 1, **characterized in that** the component consists of molybdenum, tungsten, tantalum or hafnium or of an alloy which contains at least one of these refractory metals.

3. Device according to Claim 1 or 2, **characterized in that** the component is protected from oxidation on the side remote from the glass melt by purging with a protective gas or forming gas.

4. Device according to at least one of Claims 1 to 3, **characterized in that** the component is protected from oxidation on the side remote from the glass melt by glazing.

5. Device according to at least one of Claims 1 to 4, **characterized in that** the component is of vacuum-tight design.

6. Device according to at least one of Claims 1 to 5, **characterized in that** the component is mechanically stable with respect to pressure differences.

7. Device according to at least one of Claims 1 to 6, **characterized in that** the component comprises individual pipe sections which are connected to one another by means of a flange connection or a screw connection.

8. Device according to Claim 7, **characterized in that** the connection is made gas-tight by means of cutting edges.

9. Device according to Claim 7 or 8, **characterized in that** the pipe sections which are connected to one another are annealed at high temperatures, resulting in the contact locations being welded or sintered together.

10. Device according to at least one of Claims 1 to 9, **characterized in that** the component is located in a housing, in particular in a gas-tight housing.

11. Device according to Claim 10, **characterized in that** the thermal expansion of the component with respect to the housing is compensated for, in particular by a spring-assisted bellows which is part of the housing.

12. Device according to at least one of Claims 1 to 11, **characterized in that** the component is heated.

13. Device according to Claim 12, **characterized in that** the heating is provided by means of radiation heaters.

14. Device according to Claim 13, **characterized in that** the radiation heaters are protected from oxidation by being flushed with a protective gas or forming gas.

15. Device according to Claim 13, **characterized in that** the radiation heaters are protected from oxidation by glazing.

16. Device according to Claim 12, **characterized in that** inductive heating is provided.

17. Device according to Claim 12, **characterized in that** heating is provided by means of direct flow of a high-frequency alternating current in the component.

18. Device according to Claim 12, **characterized in that** heating is provided by means of direct flow of current in the glass melt using a central stick electrode and the component as a counterelectrode.

19. Device according to Claim 19, **characterized in that** the connection to the protective gas reservoir for flooding is an automatic connection, for example an automatically opening valve.

20. Process for the reduced-pressure refining of a glass melt in a reduced-pressure apparatus, in which the glass melt is fed to a refining bank via a riser and is discharged again from the refining bank via a downpipe, a reduced pressure being generated by means of the flow of glass in the refining bank, and the riser and/or the downpipe and/or the refining bank having at least one component made from at least one refractory metal and/or from a refractory metal alloy as glass-contact material, and the inner side of the component being protected from oxidation, in particular in the event of a pressure rise or a drop in the glass melt column, by flooding with a protective gas.

## Revendications

1. Procédé d'affinage sous vide de verre en fusion à l'aide d'un appareil générateur de vide, dans lequel le verre en fusion est acheminé vers un banc d'affinage par un tuyau ascendant et ramené par un tuyau descendant du banc d'affinage, un vide étant généré au dessus du flux gazeux dans le banc d'affinage,
**caractérisé en ce que**
le tuyau ascendant et/ou le tuyau descendant et/ou le banc d'affinage présente au moins une composante constituée d'au moins un métal réfractaire et/ou d'un alliage de métal réfractaire comme matériau en contact avec le verre et qu'il est prévu une liaison avec un réservoir de gaz protecteur pour l'arrosage du dispositif avec un gaz protecteur, de sorte que la face interne de la composante, notamment en cas de hausse de pression ou de colonne de verre en fusion descendante, peut être protégée de l'oxydation par un gaz protecteur.

2. Dispositif selon la revendication 1,
**caractérisé en ce que**
la composante est constituée de molybdène, de tungstène, de tantale ou d'hafnium ou d'un alliage contenant au moins un de ces métaux réfractaires.

3. Dispositif selon la revendication 1 ou 2,
**caractérisé en ce que**
la composante, sur son côté détourné du verre en fusion, est protégée de l'oxydation par rinçage à l'aide d'un gaz protecteur ou d'un gaz de formage.

4. Dispositif selon au moins une quelconque des revendications 1 à 3,
**caractérisé en ce que**
la composante, sur son côté détourné du verre en fusion, est protégée de l'oxydation par vitrification.

5. Dispositif selon au moins une quelconque des revendications 1 à 4,
**caractérisé en ce que**
la composante est réalisée de manière à être étanche au vide.

6. Dispositif selon au moins une quelconque des revendications 1 à 5,
**caractérisé en ce que**
la composante est mécaniquement stable contre les différences de pression.

7. Dispositif selon au moins une quelconque des revendications 1 à 6,
**caractérisé en ce que**
la composante consiste en différents segments de tuyau qui sont reliés entre eux au moyen d'un raccord à bride ou d'un vissage.

8. Dispositif selon la revendication 7,
**caractérisé en ce que**
la liaison est rendue étanche au gaz à l'aide de bords bruts de coupe.

9. Dispositif selon la revendication 7 ou 8,
**caractérisé en ce que**
les segments de tuyau reliés entre eux sont recuits à hautes températures, tandis qu'il se produit un soudage ou un frittage des points de contact.

10. Dispositif selon au moins une quelconque des revendications 1 à 9,
**caractérisé en ce que**
la composante se trouve dans une enceinte, notamment une enceinte étanche au gaz.

11. Dispositif selon la revendication 10,
**caractérisé en ce que**
l'extension thermique de la composante par rapport à l'enceinte est compensée, notamment par un soufflet assisté par ressort qui fait partie intégrante de l'enceinte.

12. Dispositif selon au moins une quelconque des revendications 1 à 11,
**caractérisé en ce que**
il est prévu un chauffage de la composante.

13. Dispositif selon la revendication 12,
**caractérisé en ce que**
le chauffage est assuré par des appareils de chauffage à rayonnement.

14. Dispositif selon la revendication 13,
**caractérisé en ce que**
les appareils de chauffage à rayonnement sont protégés de l'oxydation par rinçage au moyen d'un gaz protecteur ou d'un gaz de formage.

15. Dispositif selon la revendication 13,
**caractérisé en ce que**
les appareils de chauffage à rayonnement sont protégés de l'oxydation par vitrification.

16. Dispositif selon la revendication 12,
**caractérisé en ce que**
il est prévu un chauffage à induction.

17. Dispositif selon la revendication 12,
**caractérisé en ce que**
il est prévu un chauffage par courant direct dans la composante, avec un courant alternatif à haute fréquence.

18. Dispositif selon la revendication 12,
**caractérisé en ce que**
il est prévu un chauffage par courant direct dans le verre en fusion, en utilisant une électrode barre centrale et en se servant de la composante comme contre-électrode.

19. Dispositif selon les revendications 1 à 18,
**caractérisé en ce que**
la liaison avec le réservoir de gaz protecteur servant à l'arrosage est une liaison automatique, par exemple une soupape à ouverture automatique.

20. Procédé d'affinage sous vide de verre en fusion dans un appareil générateur de vide, dans lequel le verre en fusion est acheminé vers un banc d'affinage par un tuyau ascendant et ramené par un tuyau descendant du banc d'affinage, un vide étant créé au dessus du flux gazeux dans le banc d'affinage et le tuyau ascendant et/ou le tuyau descendant et/ou le banc d'affinage présentant au moins une composante constituée d'au moins un métal réfractaire et/ou d'un alliage de métal réfractaire comme matériau en contact avec le verre et la face interne de la composante étant, notamment en cas de hausse de pression ou de colonne de verre en fusion descendante, protégée de l'oxydation par arrosage au moyen d'un gaz protecteur.
